(19) Europäisches Patentamt
European Patent Office
Office européen des brevets

(11) EP 1 197 823 A2

(12) **EUROPEAN PATENT APPLICATION**

(43) Date of publication:
17.04.2002 Bulletin 2002/16

(51) Int Cl.7: **G05D 16/20**

(21) Application number: 01402588.6

(22) Date of filing: 08.10.2001

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **17.10.2000 JP 2000316930**

(71) Applicant: **L'AIR LIQUIDE, SOCIETE ANONYME
POUR
L'ETUDE ET L'EXPLOITATION DES PROCEDES
GEORGES CLAUDE
75321 Paris Cédex 07 (FR)**

(72) Inventors:
• **Letessier, Olivier
Tsukuba, Ibaraki Prefecture (JP)**
• **Girard, Jean-Marc
Tsukuba, Ibaraki Prefecture (JP)**
• **Nasu, Akinobu
Tsukuba, Ibaraki Prefecture (JP)**

(74) Representative: **Vesin, Jacques et al
L'AIR LIQUIDE, S.A.,
Service Propriété Industrielle,
75, Quai d'Orsay
75321 Paris Cédex 07 (FR)**

(54) **Method and apparatus for the distribution of treatment liquids**

(57) The apparatus for the distribution of treatment liquids contains a gastight distribution tank (**22**) that is connected through a discharge line (**26**) to designated facilities (**12,16** and **18**), and also contains a gastight gas container (**24**) that is connected through a pressurization line (**32**) to the distribution tank (**22**). A pressure regulator (**PR1**) is provided in the pressurization line (**32**) and the pressurization gas is thereby supplied from the gas container (**24**) to the distribution tank (**22**) at a constant and specified supply pressure. This supply of pressurization gas induces the pressure-transport of the treatment liquid from the distribution tank (**22**) through the discharge line (**26**).The amount of change in the pressure of the gas container (**24**) accompanying pressure-transport of the treatment liquid is detected by a pressure gauge (**P1**), and a controller (**52**) then calculates the amount of change in the treatment liquid level within the distribution tank (**22**).

Figure 1.

EP 1 197 823 A2

**Description**

Field of the Invention

This invention relates to an apparatus and method for the distribution of treatment liquids. More particularly, this invention relates to a technology for monitoring the level of a treatment liquid in a distribution tank during distribution of the treatment liquid. This invention is particularly useful for the distribution of treatment liquids in plants, installations, and facilities in which there are severe limitations on contamination of the treatment liquid by particles, for example, as in facilities for the fabrication and processing of semiconductor devices or electronic instruments or machinery

Description of the Prior Art

It is desirable during the distribution of a treatment liquid to a designated facility to monitor the level of the treatment liquid in its distribution tank in order to enable a stable feed of the treatment liquid. The mechanisms for monitoring treatment liquid levels generally comprise measurement of the position of a float floating in the treatment liquid and measurement of the pressure (weight) of the treatment liquid, but ultrasound probes and optical fibers are also used to monitor treatment liquid levels in facilities for the fabrication and processing of semiconductor devices or electronic instruments or machinery.

Float-based mechanisms run the risk of introducing particulate contaminants into the treatment liquid as a consequence of contact between the float and the inner surfaces of the distribution tank. In addition, float-based mechanisms and mechanisms based on measurement of treatment liquid pressure lack accuracy and are bulky. Mechanisms that employ an ultrasound probe or optical fiber require the incorporation of expensive elements into the treatment liquid distribution apparatus and raise its initial cost; it is also difficult with these mechanisms to continuously monitor the liquid level. Ultrasound probe and optical fiber mechanisms also increase the scale and complexity of the treatment liquid distribution apparatus itself.

Problems to Be Solved by the Invention

This invention was developed taking into consideration the problems delineated above for the prior art. The object of this invention is to provide an apparatus and method for the distribution of treatment liquids wherein said apparatus and method enable the continuous monitoring of the level of a treatment liquid by an inexpensive mechanism that has little capacity to contaminate the treatment liquid.

Means Solving the Problems

The first aspect of this invention is an apparatus for the distribution of treatment liquids that is characteristically provided with

a gastight distribution tank that stores treatment liquid and that is connected via a discharge line to a designated facility,
a gastight gas container that is filled with a pressurization gas and that is connected via a pressurization line to the aforesaid distribution tank,
a valve that is provided in the aforesaid pressurization line and that can selectively produce a state in which the aforesaid treatment liquid is pressure-transported from the distribution tank through the discharge line to the designated facility, wherein said state is produced by utilizing the difference in pressure between the gas container and the distribution tank to supply pressurization gas from the gas container through the pressurization line to the distribution tank,
a pressure gauge that detects the pressure in the gas container, and
a calculator that calculates the amount of change in the level of the treatment liquid in the distribution tank from the amount of change in the pressure gauge-detected pressure in the gas container accompanying pressure-transport of the treatment liquid.

The second aspect of this invention comprises the apparatus of the first aspect with the additional characteristic feature that the pressurization line in said apparatus is also provided with a pressure regulator for the purpose of reducing the pressure of the pressurization gas from the gas container to a constant and specified supply pressure prior to supplying said pressurization gas to the distribution tank.

The third aspect of this invention comprises the apparatus of the first or second aspect with the additional characteristic features that the gas container in said apparatus has a sufficiently small volume that multiple fill-and-discharge cycles with the pressurization gas are necessary in order to effect pressure-transport of the treatment liquid in the distribution tank and the calculator in said apparatus calculates the overall amount of change in the level of the treatment liquid by summing the amount of change in the treatment liquid level that is calculated for each cycle.

The fourth aspect of this invention comprises the apparatus of any of the first through third aspects with the additional characteristic features that the distribution tank in said apparatus is configured in such a manner that the surface of the treatment liquid has a continuously constant surface area during the time interval of treatment liquid supply and the calculator calculates the amount of change in the level of the treatment liquid from equation (1)

$$\Delta h = (V/S) \times (Tb/Ta) \times ((Pi - Pf)/Pb) \qquad (1)$$

wherein:

> $\Delta h$ is the amount of change in the liquid level,
> V is the volume of the gas container,
> S is the surface area of the liquid surface,
> Ta is the absolute temperature within the gas container,
> Tb is the absolute temperature within the distribution tank,
> Pi and Pf are, respectively, the preliminarily set initial pressure and preliminarily set final pressure of the gas container, and
> Pb is the pressure of the gas container at the time of measurement.

The fifth aspect of this invention comprises an apparatus according to any of the first through fourth aspects with the additional characteristic feature that the apparatus is also provided with a controller that, based on the amount of change in the treatment liquid level calculated by the calculator, automatically exercises the control necessary for exchange of the distribution tank or replenishment of treatment liquid in the distribution tank.

The sixth aspect of this invention is a method for the distribution of treatment liquids that is characteristically provided with

> a process in which treatment liquid is stored in a gastight distribution tank that is connected via a discharge line to a designated facility,
> a process in which pressurization gas is filled into a gastight gas container that is connected via a pressurization line to the aforesaid distribution tank,
> a process in which the treatment liquid is pressure-transported from the distribution tank through the aforesaid discharge line to the designated facility wherein said pressure-transport is effected by opening a valve that is provided in the aforesaid pressurization line and supplying the aforesaid pressurization gas from the gas container through the pressurization line to the distribution tank utilizing the pressure difference between the gas container and the distribution tank, and
> a process in which the amount of change in the treatment liquid level within the distribution tank is calculated by a calculator based on the amount of change in the pressure in the gas container accompanying the pressure-transport of the treatment liquid wherein said pressure in the gas container is detected by a pressure gauge.

The seventh aspect of this invention is the method according to the sixth aspect with the additional characteristic feature that said method is also provided with a process in which the pressurization gas from the gas container is supplied to the distribution tank after the pressure of the pressurization gas has been reduced to a constant and specified supply pressure by the action of a pressure regulator provided in the pressurization line.

The eighth aspect of this invention is a method according to the sixth or seventh aspect with the additional characteristic features that a plural number of pressurization gas fill-and-discharge cycles are exercised at the gas container in order to pressure-transport the treatment liquid in the distribution tank and the overall amount of change in the treatment liquid level is calculated by the calculator by summation of the amount of change in the treatment liquid level that is calculated for each of said cycles.

The ninth aspect of this invention is a method according to any of the sixth to eighth aspects with the additional characteristic features that the distribution tank is configured in such a manner that the surface of the treatment liquid exhibits a continuously constant surface area during the time interval of treatment liquid feed and the calculator calculates the amount of change in the treatment liquid level using equation (1)

$$\Delta h = (V/S) \times (Tb/Ta) \times ((Pi - Pf)/Pb) \qquad (1)$$

wherein:

> $\Delta h$ is the amount of change in the liquid level,
> V is the volume of the gas container,
> S is the surface area of the liquid surface,
> Ta is the absolute temperature within the gas container,
> Tb is the absolute temperature within the distribution tank,
> Pi and Pf are, respectively, the preliminarily set initial pressure and preliminarily set final pressure of the gas container, and
> Pb is the pressure of the gas container at the time of measurement.

The tenth aspect of this invention is a method according to any of the sixth through ninth aspects with the additional characteristic feature that said method is also provided with a process in which a controller automatically effects the control necessary for exchange of the distribution tank or replenishment of the treatment liquid in the distribution tank wherein said control is effected based on the amount of change in the treatment liquid level as calculated by the calculator.

The embodiments of this invention, vide infra, explore a variety of executions of this invention, and various embodiments of this invention can be derived by suitable combination of the plural number of disclosed constituent elements. For example, when an embodiment of the invention has been derived in which some constituent elements have been omitted from the overall set of constituent elements presented for the embodiment, these omitted elements can be suitably fulfilled by conventional well-known technologies in the actual working of the derived inventive embodiment.

The mechanism for monitoring treatment liquid levels employed by the inventive apparatus and method for the distribution of treatment liquids is less expensive than mechanisms that employ an ultrasound probe or optical fiber, while being more compact and more accurate than mechanisms that employ a float or that measure the pressure of the treatment liquid. The pressure gauge used by this invention will generally have a high sensitivity. However, pressure gauges also suffer from the problem of offset, but this problem can be solved through use of a pressure difference.

One could also contemplate monitoring of the treatment liquid level through use of a gas flow meter to measure the amount of pressurization gas fed from the gas container to the distribution tank or a liquid flow meter to measure the amount of treatment liquid discharged from the distribution tank. However, flow meters have a tendency to be inaccurate when applied to measurement of the amount of flow of an intermittently fed fluid and are therefore not suitable for the apparatus and method for treatment liquid distribution to which this invention is directed.

Embodiments of the Invention

Embodiments of this invention are explained below with reference to the drawings. Constituent elements having approximately the same structure and function are assigned the same reference symbol, and their explanation will be repeated only when necessary.

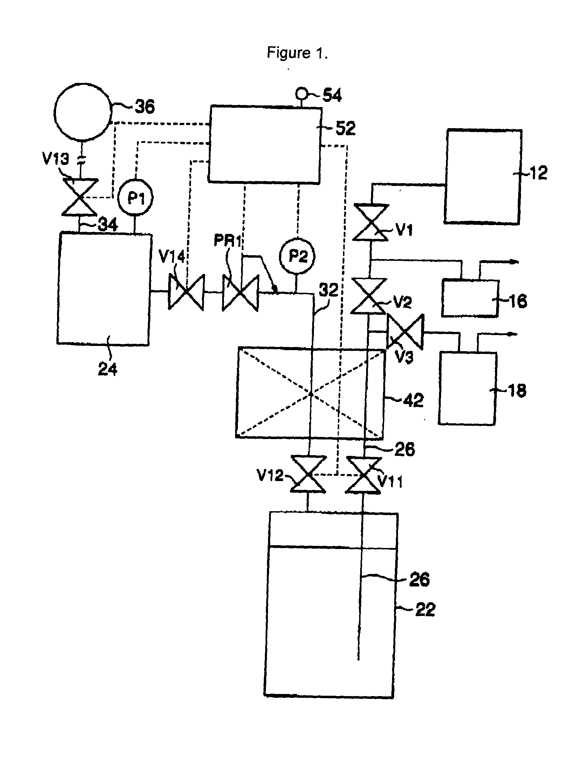

Figure 1 contains a schematic illustration of the conduit layout in an embodiment of the inventive apparatus for the distribution of treatment liquids (abbreviated below simply as the distribution apparatus).

The subject distribution apparatus includes a gastight distribution tank **22** that contains treatment liquid. This distribution tank **22** is connected through a discharge line **26** to a designated facility external to the distribution apparatus, for example, a semiconductor processing system **12**, a bubbler **16**, and a secondary distribution container **18**. This discharge line **26**, whose purpose is to supply the treatment liquid to the designated facilities, is provided with valves **V1, V2**, and **V3** for switching the line.

The subject distribution apparatus also contains a gastight gas container **24** that is filled with a pressurization gas (for example, helium (He)) residing at a pressure of about 0.5 MPa to 1.5 MPa. This gas container **24** is connected to the distribution tank **22** through the pressurization line **32** and is also connected to a large-volume gas tank **36** by a fill line **34**.

The discharge line **26** and the pressurization line **32** are provided with, respectively, valve **V11** and valve **V12**, in each case in the vicinity of the distribution tank **22**. The pressurization line **32** and the fill line **34** are provided with, respectively, valve **V14** and valve **V13**, in each case in the vicinity of the gas container **24**. A pressure regulator **PR1** is also provided in the pressurization line **32** between the valves **V14** and **V12**. This pressure regulator **PR1** functions to reduce the pressure of the pressurization gas in the gas container **24** to a constant and specified supply pressure Ps prior to feed of the pressurization gas to the distribution tank **22**.

The pressurization gas is fed to the distribution tank **22** through the pressurization line **32** utilizing the pressure difference between the gas container **24** and the distribution tank **22**. The pressurization gas pressurizes the interior of the distribution tank **22** to the supply pressure Ps established by the pressure regulator **PR1**, and this pressurization of the interior of the distribution tank **22** results in pressure-transport of the treatment liquid to the designated facility from the distribution tank **22** through the discharge line **26.**

A manifold **42** is also provided in the discharge line **26** and the pressurization line **32**. Provided in this manifold **42** are, for example, lines and valves for a purge gas and/or bypass lines and valves for suitable interconnection of the lines **26** and **32.**

A pressure gauge **P1** is attached to the gas container **24** and is also connected to a controller **52**. Utilizing the pressure of the gas container **24** that is detected by the pressure gauge **P1**, the controller **52** exercises control in such a manner that the gas container **24** is used in a range — which resides above the supply pressure Ps established by the pressure regulator **PR1** — between a preliminarily set initial pressure Pi and a preliminarily set final pressure Pf. More specifically, the controller **52** controls, inter alia, the processes of opening and closing the valves **V13** and **V14** in the vicinity of the gas container **24** and the process of filling pressurization gas from the gas tank **36** through the fill line **34** into the gas container **24**.

The controller **52** also has the ability, in a mode discussed below, to function as a calculator that can calculate the amount of change in the treatment liquid level in the distribution tank **22** from the amount of change in the pressure of the gas container **24** (pressure as detected by the pressure gauge **P1**). Based on the calculated amount of change in the treatment liquid level, the controller **52** can also verify that the treatment liquid level within the distribution tank **22** has reached a certain preliminarily set lower limit and can exercise the control necessary to exchange the distribution tank **22** or replenish the treatment liquid. Expressed in more specific terms, the controller **52** has the ability to control, inter alia, the opening and closing operations of the valves **V11** and **V12** in the vicinity of the distribution tank **22** and the ON/OFF status of the alarm **54** that alerts the operator of the necessity for exchanging the distribution tank 22 or replenishing the treatment liquid.

A pressure gauge **P2** is provided in the pressurization line **32** between the pressure regulator **PR1** and the valve **V12** and is also connected to the controller **52**. Based on the pressure in the pressurization line **32** as detected by the pressure gauge **P2**, the controller **52** effects control of the pressure regulator **PR1** so as to supply the pressurization gas to the distribution tank **22** at a constant and specified supply pressure Ps.

An embodiment of the inventive method for the distribution of treatment liquids that employs the apparatus of Figure 1 is explained hereinbelow.

First, the supply pressure Ps, for example, 0.3 MPa, of the pressurization gas afforded by the pressure regulator **PR1** is set based on the flow rate and pressure required by the designated facilities **12, 16**, and **18**. The initial pressure Pi of the gas container **24** and the final pressure Pf of the gas container 24 are also set; these pressures should be set in a range higher than the supply pressure Ps, for example, 1.5 MPa for the former and 0.5 MPa for the latter. The lower limit for the treatment liquid level is set with reference to the initial level (predetermined value) of the treatment liquid in the distribution tank **22.** These various predetermined or preset values are input into the controller **52.**

The treatment liquid is stored in the distribution tank **22** by the manufacturer or user with the level of the treatment liquid satisfying the predetermined initial value. The thusly prepared distribution tank **22** is then connected to the lines **26** and **32** and the following processes are subsequently executed under control by the controller **52**.

With the valve **V14** closed and the valve **V13** open, pressurization gas is first filled into the gas container **24** through the fill line **34** from the gas tank **36**. Filling of the pressurization gas is halted when the pressure in the gas container **24** reaches the preset initial pressure Pi, at which point the valve **13** is closed.

The valve **14** is then opened and — under the effect of the pressure difference between the gas container **24** and the distribution tank **22** — pressurization gas is supplied from the gas container **24** through the pressurization line 32 into the distribution tank **22**. During this sequence, the pressure of the pressurization gas from the gas container **24** is reduced by the pressure regulator **PR1** to a constant and specified supply pressure Ps and the pressurization gas is thereafter supplied to the distribution tank **22**. The distribution tank **22** is thereby pressurized to a constant and specified pressure and the treatment liquid therein is continuously pressure-transported at a constant and specified pressure and flow rate from the distribution tank **22** through the discharge line **26** to the designated facilities **12, 16,** and **18**.

The pressure in the gas container **24** is detected by the pressure gauge **P1** during pressure-transport of the treatment liquid, and the controller **52** calculates the amount of change in the treatment liquid level within the distribution tank **22** from the amount of change in the pressure in the gas container **24** as detected by the pressure gauge **P1**. Equation (1), for example, can be used by the controller **52** in its calculator capacity to calculate the amount of change in the treatment liquid level.

$$\Delta h = (V/S) \times (Tb/Ta) \times ((Pi - Pf)/Pb) \qquad (1)$$

wherein:

$\Delta h$ is the amount of change in the treatment liquid level,

V is the volume of the gas container **24,**

S is the surface area of the liquid surface,

Ta is the absolute temperature within the gas container **24,**

Tb is the absolute temperature within the distribution tank **22,**

Pi and Pf are, respectively, the preliminarily set initial pressure and preliminarily set final pressure of the gas container **24**, and

Pb is the pressure of the gas container **24** at the time of measurement.

Equation (1) is derived based on the assumption that the distribution tank **22** has a typical or conventional shape, or, in more specific terms, is designed to have an internal structure such that the treatment liquid has a continuously constant surface area throughout the range between the initial value of the treatment liquid surface level and the lower limit of the treatment liquid surface level (period of treatment liquid supply by the distribution tank **22**). However, even when the structure of the distribution tank **22** does not satisfy this condition, equation (1) can still be used through the insertion therein of a suitable correction term.

When the distribution tank **22** and the gas container **24** are situated in a common environment, the value of Tb/Ta becomes approximately equal to 1 and the (Tb/Ta) term in equation (1) can then be neglected from a practical standpoint. However, when the distribution tank **22** and the gas container **24** are situated in entirely different environments, the temperatures Tb and Ta must then be measured and the resulting values used in equation (1).

Proceeding as described above, the controller **52** can continuously monitor the treatment liquid level within the distribution tank **22** using the results calculated based on the pressure in the gas container **24**. When the calculated treatment liquid level falls to or below the preset lower limit, the controller **52** also effects the control actions necessary for exchange of the distribution tank **22** or replenishment of the treatment liquid, for example, as necessary the controller **52** can close the valves **V11** and **V12** and activate the alarm **54**.

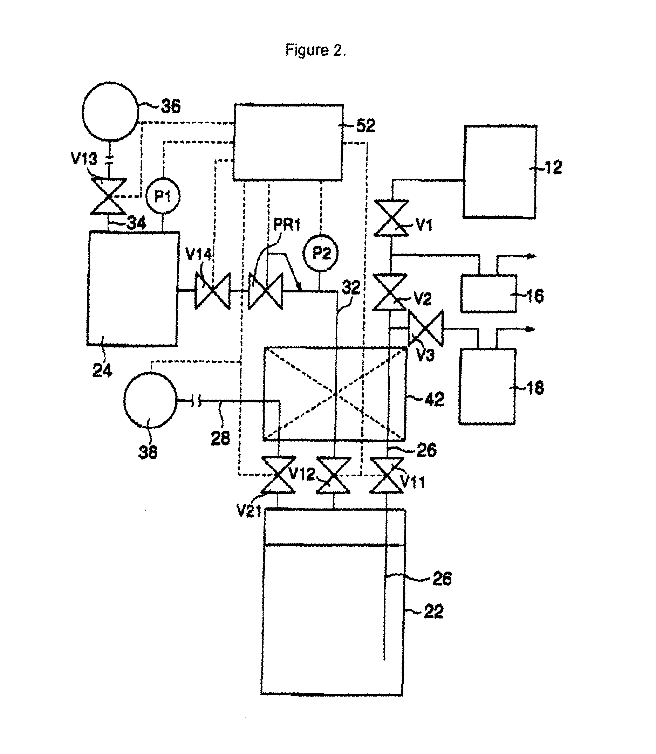

Figure 2 contains a schematic illustration of the conduit layout in another embodiment of the inventive distribution apparatus.

The distribution apparatus in Figure 2 comprises the apparatus of Figure 1 with the addition thereto of a replenishment line **28** that connects the distribution tank **22** to a large-volume treatment liquid tank **38**. A valve **V21** is provided in the replenishment line **28** in the vicinity of the distribution tank **22**. Elements such as a bypass line and valving therefor and/or a purge gas line and valving therefor are provided in the replenishment line **28** in the manifold **42**.

In this case, the controller **52** is additionally provided with the capacity to execute a control sequence that enables the distribution tank **22** to be used — again based on the calculated amount of change in the treatment liquid level within the distribution tank **22** — in a range defined by a preset upper limit and lower limit for the treatment liquid level. In other words, the controller **52** can exercise control of an operation in which the treatment liquid in the distribution tank **22** is replenished from the treatment liquid tank **38** through the replenishment line **28.**

An embodiment of the inventive method for the distribution of treatment liquids that employs the apparatus of Figure 2 is explained hereinbelow.

In this method, upper and lower limits for the treatment liquid level in the distribution tank **22** are also set when the supply pressure Ps for the pressurization gas and the initial pressure Pi and final pressure Pf for the gas container **24** are set. These set values are then input to the controller **52** and the following sequences are thereafter executed under control by the controller **52**.

Treatment liquid is first supplied from the treatment liquid tank **38** through the replenishment line **28** to the distribution tank **22.** Supply of the treatment liquid is halted when the treatment liquid level within the distribution tank **22** reaches the preset upper limit.

Using the same method as the treatment liquid distribution method described above in connection with the apparatus illustrated in Figure 1, pressurization gas is filled into the gas container **24** and treatment liquid is thereafter pressure-transported from the distribution tank **22** by discharge of the pressurization gas from the gas container **24**. The treatment liquid level within the distribution tank **22** is continuously monitored by calculation of the amount of change in the treatment liquid level within the distribution tank **22** from the amount of change in the pressure in the gas container **24**. When the calculated treatment liquid level reaches or falls below the preset lower limit, the controller **52** halts the introduction of the pressurization gas into the distribution tank **22** and thereby also halts the supply of the treatment liquid. The distribution tank **22** is then replenished with treatment liquid through the replenishment line **28** from the treatment liquid tank **38** until the treatment liquid level reaches the preset upper limit.

Since in the distribution apparatuses illustrated in Figures 1 and 2 the pressurization gas is filled in a compressed state into the gas container **24**, the volume of the gas container **24** can be substantially smaller than the volume of the distribution tank **22**. However, when the volume of the gas container **24** is so small that pressure-transport of the treatment liquid cannot be carried out from the distribution tank **22** over its entire treatment liquid supply period using a single fill of the pressurization gas, it will be necessary to refill the gas container **24** with pressurization gas during the treatment liquid supply period. In such a case the following process is carried out under control by the controller **52**.

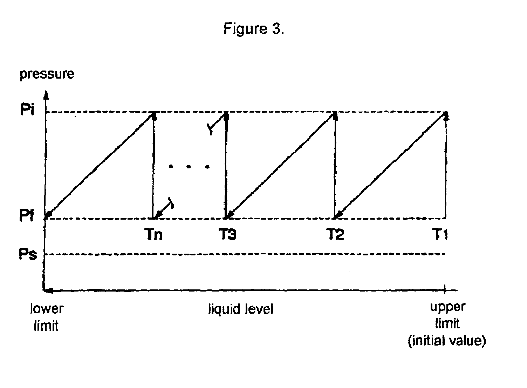

Figure 3 illustrates the pressurization gas fill-and-discharge cycle at the gas container **24** in an example of the modification described in the preceding paragraph. The x-axis in Figure 3 plots the level of the treatment liquid within the distribution tank **22**, while the y-axis plots the pressure within the gas container **24**.

After the pressurization gas has been filled into the gas container **24** (first fill at time T1), the pressure within the gas container **24** declines to the preset final pressure Pf — which is still higher than the pressurization gas supply pressure Ps established by the pressure regulator **PR1** — due to pressure-transport of the treatment liquid in the distribution tank **22**. At time **T2** the valve **14** is closed and the valve **V13** is opened and the gas container **24** is refilled with pressurization gas (second fill) through fill line **34** from the gas tank **36**.

When the pressure within the gas container **24** reaches the preset initial pressure Pi, the valve **V13** is closed to complete the pressurization gas refill. At the same time, the valve **V14** is opened and pressure-transport of the treatment liquid within the distribution tank **22** is resumed due to discharge of pressurization gas from the gas container **24**. This process is repeated and the gas container **24** is again filled with pressurization gas (third fill) when at time T3 the pressure in the gas container **24** reaches the final pressure Pf. This fill and discharge of pressurization gas can be repeated a total of n times until the treatment liquid level reaches or falls below its preset lower limit.

Treatment liquid flow rates are typically low and refilling of the gas container **24** in this modification example will take only a few seconds since the gas container **24** in this case has a small volume. As a consequence, pressure-transport of the treatment liquid from the distribution tank **22** will continue even with the valve **V14** in closed position during refill of the gas container **24.** During this period the pressure detected by the pressure gauge **P2** essentially will not decline.

In accordance with the embodiments already described above, the controller **52** will calculate the amount of change in the treatment liquid level within the distribution tank **22** for each cycle of fill and discharge of the pressurization gas from the gas container **24** into the distribution tank **22**. The overall amount of change in the treatment liquid level is then calculated by summing the individual amounts of change using equation (2).

$$\Delta h_t = \Delta h_1 + \Delta h_2 + \Delta h_3 + ... + \Delta h_n \qquad (2)$$

wherein:

$\Delta h_t$ is the overall amount of change in the treatment liquid level

$\Delta h_i$ (i = positive integer) is the amount of change in the treatment liquid level in the particular individual fill-and-discharge cycle

The controller **52** can again exercise continuous monitoring of the treatment liquid level within the distribution tank **22,** in this case using the results calculated as described above based on the pressure in the gas container **24**. When the calculated treatment liquid level reaches or falls below the preset lower limit, the controller **52** will carry out exchange of the distribution tank **22** (apparatus illustrated in Figure 1) or replenishment of treatment liquid into the distribution tank **22** (apparatus illustrated in Figure 2).

The pressurization gas used for pressure-transport of the treatment liquid in the embodiments described above with reference to Figures 1, 2, and 3 can be any gas that is inert with regard to the treatment liquid, but will preferably be an inert gas such He, Ar (argon), $N_2$ (nitrogen), and the like.

While various modifications and alterations within the technical sphere of the concept of this invention can be devised by the individual skilled in the art, it should be understood that these modifications and alterations also fall within the scope of this invention.

Advantageous Effects of the Invention

As has been described hereinabove, this invention provides an apparatus and method for the distribution of treatment liquids wherein said apparatus and method enable the level of a treatment liquid to be continuously monitored using an inexpensive mechanism that has little capacity to contaminate the treatment liquid.

Brief Description of the Drawings

Figure 1 contains a schematic diagram of the conduit layout in an apparatus for the distribution of treatment liquids that is an embodiment of this invention.

Figure 2 contains a schematic diagram of the conduit layout in an apparatus for the distribution of treatment liquids that is another embodiment of this invention.

Figure 3 contains a diagram that illustrates the pressurization gas fill-and-discharge cycle at the gas container in a modified example of the embodiments illustrated in Figures 1 and 2.

Reference symbols

| 12, 16, 18 | external facilities |
| 22 | distribution tank |
| 24 | gas container |
| 26 | discharge line |
| 28 | replenishment line |
| 32 | pressurization line |
| 34 | fill line |
| 36 | gas tank |
| 38 | treatment liquid tank |
| 42 | manifold |
| 52 | controller |
| 54 | alarm |
| PR1 | pressure regulator |

**Claims**

1. Apparatus for the distribution of treatment liquids that is characteristically provided with a gastight distribution tank that stores treatment liquid and that is connected via a discharge line to a designated facility, a gastight gas container that is filled with a pressurization gas and that is connected via a pressurization line to the aforesaid distribution tank, a valve that is provided in the aforesaid pressurization line and that can selectively produce a state in which the aforesaid treatment liquid is pressure-transported from the distribution tank through the discharge line to the designated facility, wherein said state is produced by utilizing the difference in pressure between the gas container and the distribution tank to supply pressurization gas from the gas container through the pressurization line to the distribution tank, a pressure gauge that detects the pressure in the gas container, and a calculator that calculates the amount of change in the level of the treatment liquid in the distribution tank from the amount of change in the pressure gauge-detected pressure in the gas container accompanying pressure-transport of the treatment liquid.

2. The apparatus of claim 1 for the distribution of treatment liquids, **characterized in that** the pressurization line is also provided with a pressure regulator for the purpose of reducing the pressure of the pressurization gas from the gas container to a constant and specified supply pressure prior to supplying said pressurization gas to the distribution tank.

3. The apparatus of claim 1 or 2 for the distribution of treatment liquids, **characterized in that** the gas container has a sufficiently small volume as to make necessary a plural number of pressurization gas fill-and-discharge cycles in order to effect pressure-transport of the treatment liquid in the distribution tank and **in that** the calculator calculates the overall amount of change in the level of the treatment liquid by summing the amount of change in the treatment liquid level that is calculated for each cycle.

4. The apparatus according to any of claims 1 to 3, **characterized in that** the distribution tank is configured in such a manner that the surface of the treatment liquid has a continuously constant surface area during the time interval of treatment liquid supply and **in that** the calculator calculates the amount of change in the level of the treatment liquid from equation (1)

$$\Delta h = (V/S) \times (Tb/Ta) \times ((Pi - Pf)/Pb) \quad (1)$$

wherein:

$\Delta h$ is the amount of change in the liquid level,
V is the volume of the gas container,
S is the surface area of the liquid surface,
Ta is the absolute temperature within the gas container,
Tb is the absolute temperature within the distribution tank,
Pi and Pf are, respectively, the preliminarily set initial pressure and preliminarily set final pressure of the gas container, and
Pb is the pressure of the gas container at the time of measurement.

5. The apparatus according to any of claims 1 to 4 for the distribution of treatment liquids, **characterized in that** said apparatus is additionally provided with a controller that, based on the amount of change in the treatment liquid level calculated by the calculator, automatically exercises the control necessary for exchange of the distribution tank or replenishment of treatment liquid in the distribution tank.

6. Method for the distribution of treatment liquids that is characteristically provided with
a process in which treatment liquid is stored in a gastight distribution tank that is connected via a discharge line to a designated facility,
a process in which pressurization gas is filled into a gastight gas container that is connected via a pressurization line to the aforesaid distribution tank,
a process in which the treatment liquid is pressure-transported from the distribution tank through the aforesaid discharge line to the designated facility wherein said pressure-transport is effected by opening a valve that is provided in the aforesaid pressurization line and supplying the aforesaid pressurization gas from the gas container through the pressurization line to the distribution tank utilizing the pressure difference between the gas container and the distribution tank, and
a process in which the amount of change in the treatment liquid level within the distribution tank is calculated by a calculator based on the amount of change in the pressure in the gas container accompanying the pressure-transport of the treatment liquid wherein said pressure in the gas container is detected by a pressure gauge.

7. Method according to claim 6 for the distribution of treatment liquids, that is characteristically additionally provided with a process in which the pressurization gas from the gas container is supplied to the distribution tank after the pressure of the pressurization gas has been reduced to a constant and specified supply pressure by the action of a pressure regulator provided in the pressurization line.

8. Method according to claim 6 or 7 for the distribution of treatment liquids, in which a plural number of pressurization gas fill-and-discharge cycles are exercised at the gas container in order to pressure-transport the treatment liquid in the distribution tank and in which the overall amount of change in the treatment liquid level is calculated by the aforesaid calculator by summation of the amount of change in the treatment liquid level that is calculated for each of said cycles.

9. Method according to any of claims 6 to 8 for the distribution of treatment liquids, **characterized in that** the distribution tank is configured in such a manner that the surface of the treatment liquid exhibits a continuously constant surface area during the time interval of treatment liquid feed and the calculator calculates the amount of change in the treatment liquid level using equation (1)

$$\Delta h = (V/S) \times (Tb/Ta) \times ((Pi - Pf)/Pb) \quad (1)$$

wherein:

$\Delta h$ is the amount of change in the liquid level,
V is the volume of the gas container,
S is the surface area of the liquid surface,
Ta is the absolute temperature within the gas container,
Tb is the absolute temperature within the distribution tank,
Pi and Pf are, respectively, the preliminarily set initial pressure and preliminarily set final pressure of the gas container, and
Pb is the pressure of the gas container at the time of measurement.

10. Method according to any of claims 6 through 9 for the distribution of treatment liquids, **characterized in that** said method is additionally provided with a process in which a controller automatically effects the control necessary for exchange of the distribution tank or replenishment of the treatment liquid in the distribution tank wherein said control is effected based on the amount of change in the treatment liquid level as calculated by the calculator.

Figure 1.

Figure 2.

Figure 3.